# EUROPEAN PATENT APPLICATION

(11) **EP 3 978 188 A1**
(43) Date of publication of application: **06.04.2022**
(21) Application number: 20199822.6
(22) Date of filing: 02.10.2020
(51) Int. Cl.: B23Q 3/155, B25J 9/04, B25J 9/10

(54) **GRIPPING DEVICE FOR AUTOMATIC TOOL CHANGER**

(71) Applicant: GF Machining Solutions AG, 3550 Langnau im Emmental (CH)
(72) Inventor: Aeschbacher, Timo, 3665 Wattenwil (CH); Haueter, Ernst, 3533 Bowil (CH); Scheidegger, Andreas, 3510 Konolfingen (CH)
(74) Representative: Fenner, Seraina

(57) **Abstract**

The present invention is related to a gripping device for an automatic tool changer, in particular for gripping a machining tool mounted in a machine tool comprising: a first arm being rotatable about a first rotation axis R1, a driving unit operationally connected by a first shaft to the first arm for rotating the first arm, a second arm being rotatable about a second rotation axis R2, which is in parallel to the first rotation axis R1, a gripper unit fixedly mounted on one end of the second arm for grasping the machining tool; and a transmission mechanism coupled to the first arm and the second arm and configured to enable the movement of the second arm by transmitting the movement of the first arm to the second arm.

## Description

### FIELD OF THE INVENTION

The present invention is related to a gripping device for an automatic tool changer.

### BACKGROUND OF INVENTION

Automation for machining is essential to improve the performance of the production, in particular the production sufficiency. Automatic tool changer is one of the automation tools widely utilized to reduce machining time. Standard automatic tool changer comprises a tool magazine and a gripper unit to change the tools. However, most of the standard gripper unit demand large space to load the tool from the magazine into the spindle nose. This causes the contradiction to design the compact machine, since in the compact machine tool the space between the tool magazine and the spindle nose is limited.

In further, robot is widely used to improve the automation of the machining to increase the production efficiency. US 2016/0067840 discloses an automatic tool changer for automatically changing a tool attached to a lower tool rest of a machine tool. The tool changer includes a robot arm and a movement mechanism unit moving the robot arm between inside and outside of a machining area. The movement mechanism unit has a base member, a linear guide, a rack and pinion, a servo motor and a support pillar as a mechanism for causing robot arm to linearly reciprocate. The robot arm can rotate around different axes. However, the construction of the tool changer is complex.

### SUMMARY OF THE INVENTION

It is an objective of this invention to provide a gripping device for automatic tool changer, which is compact and needs less space. It is a further objective of this invention to provide a gripping device for automatic tool changer having a simple design. It is in particular an objective of this invention to provide a gripping device using standard components.

According to the present invention, these objectives are achieved through the features of independent claims. In addition, further advantageous embodiments follow from the dependent claims and the description.

In the present invention, a gripping device for automatic tool changer, in particular for gripping a machining tool mounted in a spindle of a machine tool comprises a first arm, a driving unit, a transmission mechanism and a gripper unit. The first arm is configured to be rotatable about a first rotation axis R1. The driving unit is operationally connected to the first arm by a first shaft for rotating the first arm. Additionally, the driving unit is designed to be able to lower and/or lift the first arm in a direction parallel to the first rotation axis R1. An additional arm, in particular a second arm is provided and is rotatable about a second rotation axis R2. The rotation axis of the first arm and the second arm are substantially parallel to one another. The gripper unit for gripping the tool is fixedly mounted on a free end of the second arm for grasping the machining tool. A transmission mechanism is coupled to the first arm and the additional arm , in particular the second arm for transmitting the movement of the first arm to the additional arm, in particular the second arm. Preferably, the transmission mechanism is configured to transmit rotation movement and/or the translation movement of the first arm to the additional arm, in particular the second arm. In a preferred variant, transmission can be understood that, the rotation movement of the second arm is dependent on the rotation movement of the first arm. Since the gripper unit is fixedly mounted on the end of the second arm, the gripper unit follows the rotation movement of the second arm. Due to applying the transmission mechanism, additional driving unit such as motors to directly drive the second arm can be saved, which leads to a space-saving and simple design. The gripping device is configured to utilize the relative movement of the first arm and the first pulley to drive the second pulley through the belt.

In a preferred embodiment, the first rotation axis R1 and the second rotation axis R2 are in the direction vertical to the horizontal plane.

In order to reduce the complexity of the device, the first arm features only one rotation axis, a single rotation axis. The second arm features only one rotation axis.

In a preferred embodiment, the second arm is foldable. In particular, the second arm is foldable on a plane, which is vertical to the rotation axis of the second arm. The folding movement is coupled with the rotation movement of the first arm. The second arm has a folded state and a stretched-out state. In the folded state, the gripping unit of the second arm is hidden under the first arm. Especially, the second arm is entirely positioned below the first arm to reduce the dimension of the device in the horizontal direction. In the stretched-out state, the second arm is turned by 180° from the folded state such that the total length of the device is extended to reach the position for gripping a tool. Standard automatic tool changer consists of a tool magazine and a gripping device for changing the tool. Since the space in the machine is limited, the length of the device in the horizontal direction is desired to be short. When the second arm is in the folded state, the total length of the device in the direction vertical to the rotation axis is defined mainly by the length of the first arm. The second arm extends totally, when it reaches the spindle at the stretched-out state. Thus, a foldable gripping device can be achieved, which needs less space in the machine tool to rotate the gripper unit to the right position for receiving the tool. In one application, the gripping device is arranged in the machine tool between the spindle and the tool magazine. The distance between the spindle and the tool magazine is large but the space therebetween is limited to rotate the second arm with the fully stretched length. Therefore, the foldable second arm provides a big advantage to overcome this limitation. In further, the folding and stretch-out movement is coupled with the rotation movement of the first arm through the transmission mechanism. This leads to a simple and low-cost design of the device, since only one driving unit is required.

The transmission mechanism serves to transmit the movement, in particular the rotation movement of the first arm to the second arm with a pre-selected transmission ratio. This function can be achieved based on one of the following mechanisms: a toothed belt transmission, a chain transmission including a chain and at least two chain pulleys, a gear transmission, particularly, an electrical gear transmission and a hydraulic transmission.

In one embodiment, the transmission ratio of two is selected to enable the second arm to reach the folded state and the stretched-out state by transmitting the rotation movement of the first arm to the second arm. By selecting the transmission ratio of two, the rotation speed of the second arm is the twice of the rotation speed of the first arm. Therefore, by rotating the first arm for 90° relative to the start position, the second arm can be rotated for 180° relative to the start position. Consequently, the second arm can be stretched out from the folded state or folded from the stretched-out state.

At an initial position, the second arm is in the folded state and the no machining tool is received in the gripper unit. The initial position defines the start position before the first arm starts to rotate. At a gripping position, the second arm has a rotation angle of 180 degree from the initial position and is stretched out such that the gripper unit is located in the proximity of the spindle at the right position for receiving the tool. When the gripping process starts, the first arm must rotate 90 degree to reach the gripping position.

In one variant, the transmission mechanism comprises a first pulley and a second pulley and a toothed belt is coupled between the first pulley and the second pulley to transmit the rotation movement of the first arm to the second pulley. Advantageously, the first pulley and the second pulley are arranged on the same plane, which is vertical to the rotation axis of the first arm and the second arm. Through a single rotation of the first arm, particularly a rotation of 360 degree, a tool mounted in the machine tool can be taken out and stored in the tool magazine or a tool stored in the tool magazine can be taken out and mounted in the spindle of the machine tool.

In a preferred variant, the first pulley is arranged concentrically around the first shaft and above the first arm. The rotation axis of the first arm coincides with the central axis of the first pulley. The first pulley is operationally connected to the first shaft and is configured to be non-rotatable relative the first arm, whereby a simple design can be obtained. The rotation movement of the first shaft is blocked by an arresting means, in particular by inserting at least one guiding pin therein. However, other elements for blocking the rotation movement can also be applied. The second pulley is rotatablely mounted above the first arm. A second shaft of the second pulley operationally connects the second pulley, the first arm and the second arm. The second pulley is arranged above the first arm and the second arm is arranged below the first arm. While the second pulley is fixedly mounted on the second shaft, the first arm is attached to the second shaft by at least one bearing, in particular, the bearing is a ball bearing. Through the toothed belt, the rotation movement of the first arm is coupled to the second shaft. The transmission ratio is achieved by designing the first pulley and the second pulley having different diameters. If the diameter of the first pulley is twice of the diameter of the second pulley, the transmission ratio of two can be obtained. In a preferred variant, the first pulley and the second pulley are toothed belt pulley.

In an advantageous variant, the first pulley is axial moveably connected to the driving unit. In further, the axial movement is guided by the guiding pins. In particular, the first pulley is non-rotatablely attached by the guiding pin to the driving unit. The guiding pins serves for blocking the rotation of the first pulley. In further, the guiding pins is able to guide the vertical movement of the first pulley.

The driving unit is configured to move a first arm unit including the first arm and the transmission mechanism in the axial direction, in particular the driving unit is configured to enable a stroke movement of the first arm and all elements attached thereon. The first arm is liftable and lowerable in the vertical direction.

In particular, the driving unit is designed to lower the first arm, the second arm and the transmission mechanism in a direction parallel to the rotation axes R1, R2, in particular in the vertical direction, for dismounting the tool from for example the spindle of the machine tool. In further, the driving unit is designed to be able to lift the first arm upwards, the second arm and the transmission mechanism in a direction parallel to the rotation axes R1, R2, in particular in the vertical direction, for mounting the tool for example in the spindle of the machine tool. The length of the lowering and the lifting movement are defined, for example in the range of several cm, particularly, 5cm.

When the first arm reaches the gripping position, where the gripper unit is located in the proximity of the tool to be grasped and the machining tool is received in the gripper unit, the first arm unit and the second arm attached thereon are lowered in the vertical direction for a defined length. This movement serves as dismounting the tool from the spindle. The gripper unit includes an effector arranged at the end of the second arm for receiving the tool therein, and the effector is formed by a non-moveable holder and a moveable finger connected to the holder to form a receiving space for receiving the machining tool therein.

The gripper unit comprises a locking unit to lock and unlock the movement of the finger.

The locking unit comprises a blocking mechanism to prevent the movement of the finger, and an activating means to release the blocking mechanism to allow the movement of the finger. In particular, the blocking mechanism is coupled with the position of the first arm, in particular the rotation angle. By this way, the movement of the finger can be controlled merely by the movement of the first arm without any additional control units.

The activating means comprises a stopper mounted on the bottom side of the second arm closely to the second shaft of the second pulley, a slider arranged in the second arm closely to the second shaft and when the stopper comes into contact with the slider, the slider is pushed away from the second shaft to release the blocking mechanism.

The finger has a first portion having a curved shape for receiving the machining tool with the holder and a second portion connected to a first spring element. The slider has a first end closely to the second shaft and a second end closely to the first spring element. In the locking state, the first spring element is stretched out since the second end of the slider is pressed against the second portion of the finger such that the first portion of the finger turns towards the holder about the rotation axis R4. Moreover, the second end of the slider is connected by a second spring element to a fixed part of the effector. When the second end of the slider is pressed on the second portion of the finger, the second spring element is pressed by the slider against the fixed part.

The finger can rotate about a rotation axis positioned between the first portion and the second portion, when it is unlocked. The first spring element limits the rotation range of the finger. The slider can slide in a direction vertically to the rotation axis R1. When the slider slides away from the second shaft and, in particular when the first arm reaches a first rotation angle, the activating means, for example the stopper pushes the slider away from the activating means and the second end of the slider loses the contact with the second portion of the finger and the finger is unlocked. Due to the first spring element, the finger rotates automatically about the rotation axis R4 in a direction that the first end of the finger turns away from the holder such that the space for receiving the tool is enlarged. The slider stays at this position to retain the unlocking status of the blocking mechanism until the first arm reaches a second rotation angle. The rotation angles range from the first rotation angle to the second rotation angle is from 80 degree to 90 degree. When the first arm reaches a second rotation angle, the stopper loses the contact with the first end of the slider and the slider moves back to the initial position due to the second spring element and the finger is locked again.

In order to improve the sufficiency and reduce the time of changing the tools, the gripping device further comprises an additional third arm having the gripper unit arranged thereon. In one preferred variant, the third arm has the same structure as the second arm. Particularly, the gripper unit attached on the third arm has the same structure as the gripper unit attached to the second arm. If the rotation movement of the third arm is also coupled with the rotation of the first arm, the movement of the second arm and the third arm can be synchronized.

In this embodiment, the transmission mechanism comprises a second pulley arranged on one side of the first pulley and a third pulley arranged on the other side of first pulley and the transmission belt coupled between the first pulley and the second pulley and the third pulley to transmit the rotation of the first arm to the second pulley and the third pulley.

In the present invention, a tool changer comprises a tool magazine to store a plurality of machining tools and the gripping device.

In the present invention, a machine tool comprises a spindle for mounting a machining tool therein to machine a workpiece and a tool magazine to store a plurality of machining tools and the gripping device. The gripping device is arranged between the spindle and the tool magazine. In particular, the gripping device is arranged on a supporting element fixed on the tool magazine.

### Brief Description of the Drawings

In order to describe the manner in which advantages and features of the disclosure can be obtained, in the following a more particular description of the principles briefly described above will be rendered by reference to specific embodiments thereof, which are illustrated in the appended drawings. These drawings depict only exemplary embodiments of the disclosure and are not therefore to be considered to be limiting of its scope. The principles of the disclosure are described and explained with additional specificity and detail through the use of the accompanying drawings in which:
- Fig. 1a, 1b: illustrate 3D view of one embodiment
- Fig. 2: illustrates a sectional view of one embodiment;
- Fig.3a, 3b: illustrate the third arm and the gripper unit;
- Fig. 4a and 4b: illustrate the locked and unlocked status of the finger;
- Fig. 5a-5c: illustrate the gripping process; and
- Fig. 6a, 6b: illustrate the tool magazine and the gripping device.

### EXEMPLARY EMBODIMENTS

Figures illustrate one embodiment of the present invention. In the following description and for this embodiment, the direction parallel to a rotation axes R1 of a first arm is referred to as a Z-axis.

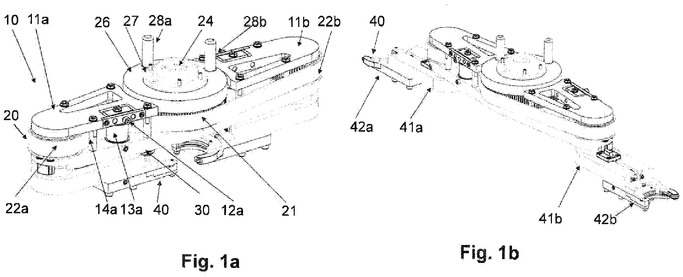

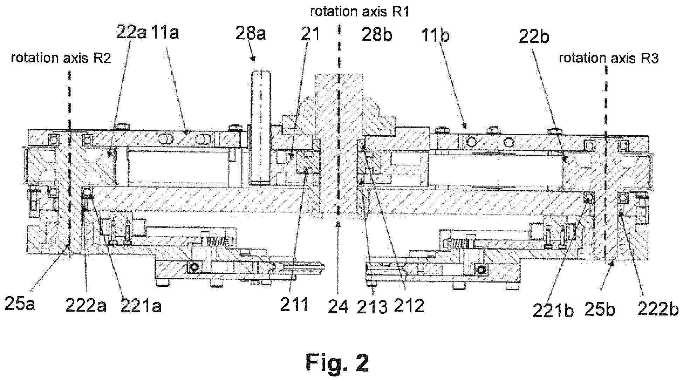

Figures 1a and 1b show 3-dimensional views of one embodiment of the device in a folded state and in a stretched-out state, respectively. Figure 2 is a sectional view of the gripping device. The device comprises a first arm 30, at the top side of which a transmission mechanism 20 is arranged. The first arm is connected to a first shaft 24 of a driving unit to be rotatable about a rotation axis R1.

The transmission mechanism includes a first pulley 21, a second pulley 22a, and a third pulley 22b, which are toothed-belt pulley and a toothed belt running around the first pulley, the second pulley and the third pulley to transfer the rotation movement of the first arm to the second pulley and the third pulley. The first pulley is attached to the first shaft by bearings 211, e.g. ball bearings. At least one guiding element 28a, 28b is mounted through the first pulley in the axial direction to block the rotation movement of the first pulley. A second shaft 25a and a third shaft 25b are concentrically arranged in the second pulley 22a and the third pulley 22b, respectively. In further, the second shaft 25a and the third shaft 25b are fixedly connected to the second pulley and the third pulley, respectively. In one embodiment, the second shaft and second pulley are formed in one part and the third shaft and the third pulley are formed in one part.

As illustrated in figure 2, the second shaft is rotatable about a second rotation axis R2 and the third shaft is rotatable about a third rotation axis R3. The distance in the radial direction from the first rotation axis R1 to second rotation axis R2 is equal to the distance from the first rotation axis R1 to third rotation axis R3.

The first arm has an elongated shape with two distal ends. At one end, the first arm is attached to the second shaft by bearings 221a and at the other end, the first arm is attached to the third shaft by bearings 221b. A second arm 41a is fixedly mounted on the second shaft below the first arm and a third arm 41b is fixedly mounted on the third shaft below the first arm.

At the top side of the first pulley, a guiding plate 26 is fixedly mounted to the driving unit to attach the gripping device to the driving unit. The guiding plate and the first pulley are axially connected by the guiding elements. The guiding plate is attached to the first shaft 21 by a first distance ring 212, while the first pulley is attached to the first shaft by bearings 211 and a second distance ring 213 positioned below the bearings 211.

A plurality of supporting elements 14a are fixedly mounted on the top surface of the first arm to support a first base plate 11a and a second base plate 11b on the top of thereof.

In further, a first pair of belt-tensional cylinders 13a is fixedly mounted on the first arm between the first rotation axis R1 and the second rotation axis R2. A second pair of belt-tensional cylinders are mounted on the first arm between the between the first rotation axis R1 and the third rotation axis R3. The belt-tensional cylinders are used to improve the arc of the contact of the belt. For each belt-tensional cylinder, a belt-tensional regulating means 12a for adjusting the tension of the belt is mounted on the side surface of the top plate and is movable in a direction, which is vertically to the axial direction of the belt-tensional cylinder.

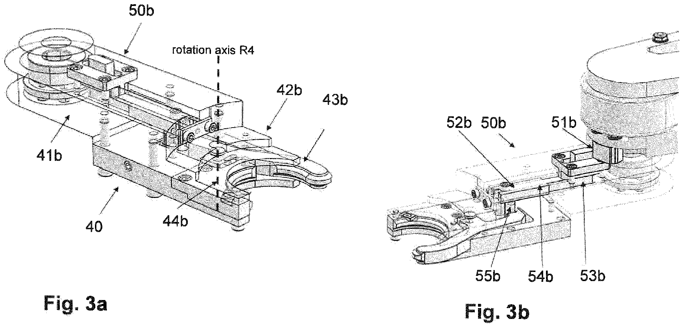

Figures 3a, 3b and 3c illustrate the third arm. In this embodiment, the second arm has the same structure as the third arm. The third arm has two distal ends. A first end of the third arm is fixedly mounted to the third shaft such that the third arm can rotate about the rotation axis R3. On a second end of the third arm opposite to the first end, an effector 42b is provided. The effector comprises a non-moveable holder 44b and a moveable finger 43b connected together to form a space for receiving the tool. The finger and the holder both have a curved shape to fit the outer contour of the machining tool.

The finger is moveable and can rotate about a rotation axis R4 for a defined angle. The rotation of the finger can be locked and unlocked by a locking mechanism 50b, which comprises an activating means, a slider and a blocking mechanism. The activating means comprises a stopper 51b mounted on the bottom side of the first arm closely to the third shaft of the third pulley. The slider is arranged on the top side of the third arm closely to the third shaft and when the stopper comes into contact with the slider, the slider is pushed away from the third shaft to release the blocking mechanism.

The slider has a first portion 53b, a second portion 54b and the third portion 55b. The first portion 53a extends upwards on the second portion 54b and is able to come into contact with the activating means and the third portion 55b extends downwards from the second portion and is coupled to the blocking mechanism.

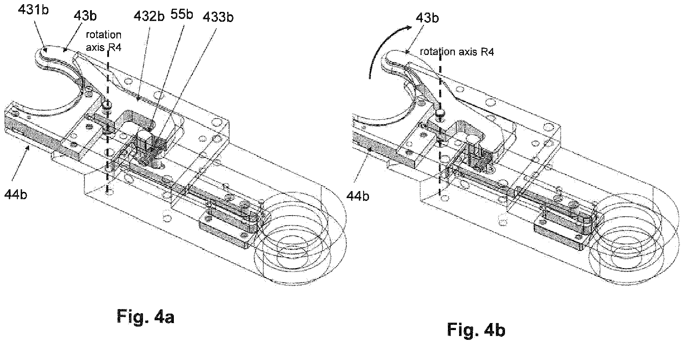

As illustrated in figures 4a and 4b, the finger has a first portion 431b having a curved shape for receiving the machining tool with the holder and a second portion 432b connected to a first spring element 433b. The first portion 53b of the slider is arranged closely to the third shaft and the third portion 55b of the slider closely to the second portion of the finger. In the locking state, the first spring element is stretched out since the third portion 55b of the slider is pressed against the second portion 432b of the finger such that the first portion 431b of the finger turns towards the holder about the rotation axis R4. Moreover, the third portion 55b of the slider is connected by a second spring element not shown to a fixed part of the effector.

The finger can rotate about a rotation axis positioned between the first portion and the second portion of the finger, when it is unlocked. The first spring element limits the rotation range of the finger. The slider can slide in a direction vertically to the rotation axis R1. When the slider slides away from the third shaft and, in particular when the first arm reaches a first rotation angle, the activating means for example the stopper pushes the slider away from the activating means and the third portion of the slider loses the contact with the second portion of the finger and the finger is unlocked. Due to the first spring element, the finger rotates automatically about the rotation axis R4 in a direction that the first portion of the finger turns away from the holder as depicted by the arrow in figure 4b. The slider stays at this position to retain the unlocking status of the blocking mechanism until the first arm reaches a second rotation angle. When the first arm reaches a second rotation angle, the stopper loses the contact with the first portion of the slider and the slider moves back to the initial position, in particular due to the extension of the second spring element and the finger is locked again.

In figure 1a, the device is shown at the initial position, in which the second arm and the third arm are in a folded state and the gripper unit is positioned below the first arm such that the total length of the device is almost determined by the length of the first arm. In figure 1b, the device is shown at the gripping position, in which the second arm and the third arm are in a stretched-out state and the gripper unit is not positioned below the first arm and the total length of the device is extended such that the effector can be located closely to the tool to be grasped.

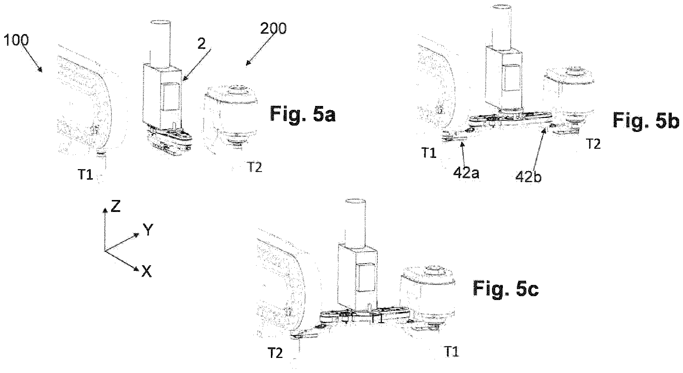

Figures 5a, 5b, 5c, and 5dillustrate the process, when the device is applied to change the machining tool installed in a machine tool and/or a tool storage, or a tool magazin.

Figure 5a illustrates the initial position, at which a first cutting tool T1 is mounted in a tool storage 100 of the machine tool and a second cutting tool T2 is mounted in a spindle 200 of the machine tool. The second cutting tool T2 should be replaced by the first cutting tool T1 to machine a working piece. At the initial position, the second arm with the gripper unit and the third arm with the gripper unit are folded below the first arm. The first arm is positioned having the length direction in X direction. The motor 2 drives the first shaft to rotate the first arm. In this embodiment, the transmission mechanism is designed to obtain a rotation speed of the second arm, which is the twice of the rotation speed of the first arm. As shown in figure 5b, when the first arm rotates 90 degree, the second arm having the gripper unit rotates 180 degree and is stretched out. The first effector 42a is positioned in the proximity of the tool storage and closely to the tool T1 to be fetched by the device, whereas the second effector 42b is positioned in the proximity of the spindle of the machine tool and closely to the second tool T2.

The first arm, the second arm, the third arm and the transmission mechanism are lowed to a lowering position, coincidently. Only the guiding plate is fixed on the driving unit and is not lowered. The lowering movement serves the dismounting of the tools.

After the both tools are received in the effectors, the motor further rotates the first arm by retaining the lowering position of the device. Figure 5c shows the state when the first shaft rotates to 270 degree. At this position, the second arm rotates 540 degree, therefore, the first tool is positioned in the proximity of the spindle and the second tool is positioned in the proximity of the tool storage. The driving unit lifts the device back the z-position of the initial state upwards. The lifting movement serves as the mounting the tool into the spindle.

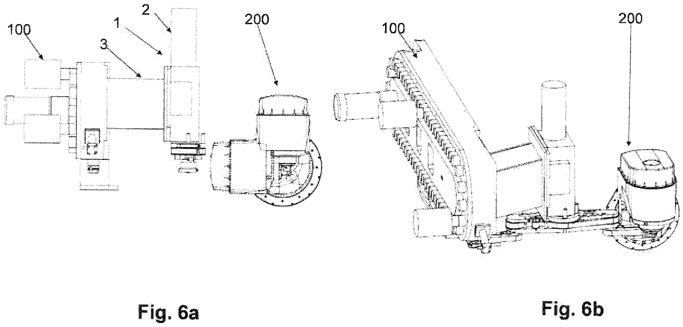

Figures 6a and 6b show the arrangement of the gripping device 1 in a machine tool. Figures illustrate only the spindle 200 of the machine tool. A machining tool storage is arranged closely to the machine tool and having a frame to mount the gripping device thereon. A motor 2 to drive the first shaft and to lower and lift the first arm is mounted on the top of the gripping device.

### LIST OF REFERENCES

- 1: gripping device
- 2: motor
- 3: frame
- 11a, 11b: top plate
- 12a: belt-tensional regulating means
- 13a,: first pair of belt-tensional cylinder
- 14a,: supporting element
- 20: transmission mechanism
- 21: first pulley
- 211: bearing for first pulley
- 212: first distance ring
- 213: second distance ring
- 22a: second pulley
- 221a: bearing for second pulley
- 222a: distance ring for second pulley
- 22b: third pulley
- 221b: bearing for third pulley
- 222b: distance ring for third pulley
- 24: first shaft
- 25a: second shaft
- 25b: third shaft
- 26: guiding plate
- 27: cover
- 28a, 28b: guiding element
- 30: first arm
- 40: gripper unit
- 41a: second arm
- 41b: third arm
- 42a, 42b: effector
- 43a, 43b: finger (moveable)
- 431b: first portion of finger
- 432b: second portion of finger
- 433b: first spring element
- 44a, 44b: holder
- 50b: locking unit
- 51b: stopper
- 52b: slider
- 53b: first portion of slider
- 54b: second portion of slider
- 55b: third portion of slider
- 100: tool storage
- 200: spindle

## Claims

1. A gripping device (10) for an automatic tool changer, in particular for gripping a machining tool mounted in a machine tool comprising:
a. a first arm (30) being rotatable about a first rotation axis R1;
b. a driving unit operationally connected by a first shaft (24) to the first arm for rotating the first arm;
c. a second arm (41a) being rotatable about a second rotation axis R2, which is in parallel to the first rotation axis R1;
d. a gripper unit (40) fixedly mounted on one end of the second arm for grasping the machining tool; and
e. a transmission mechanism (20) coupled to the first arm and the second arm and configured to enable the movement of the second arm by transmitting the movement of the first arm (30) to the second arm.

2. The device according to claim 1, wherein the transmission mechanism comprises a first pulley (21), a second pulley (22a) and a toothed belt or chain coupled between the first pulley and the second pulley to transmit the rotation of the first arm to the second pulley, in particular the first pulley and the second pulley are toothed belt pulley.

3. The device according to claim 1 or 2, wherein the first pulley is operationally connected to the first shaft and is configured to be non-rotatable relative to the first arm, and the first arm is attached to a second shaft of the second pulley by at least one bearing, and the second arm is fixedly attached on the second shaft.

4. The device according to claim 3, wherein at least one arresting means is provided to block the rotation of the first pulley, in particular a guiding pin is inserted in the first pulley to block the rotation of the first pulley.

5. The device according to one of claims 2 to 4, wherein the first pulley and the second pulley are arranged on the top side of the first arm and the second arm is arranged on the bottom side of the first arm.

6. The device according to one of the previous claims, wherein the driving unit is configured to be able to lower and/or lift the first arm, the transmission mechanism and the second arm in a direction parallel to the first rotation axis R1, in particular, the first arm, the transmission mechanism and the second arm can be lowered and/or lifted simultaneously.

7. The device according to one of the previous claims, wherein the gripper unit includes an effector arranged at one end of the second arm for receiving the machining tool therein, and the effector (42a) is formed by a non-moveable holder (44a) and a moveable finger (43a) connected to the holder to form a receiving space for receiving the machining tool therein.

8. The device according to claim 7, wherein the gripper unit (40) comprises a locking unit (50b) for locking and unlocking the movement of the finger.

9. The device according to claim 8, wherein the locking unit comprises a blocking mechanism to prevent the movement of the finger, and an activating means to release the blocking mechanism to allow the movement of the finger, in particular the blocking mechanism is coupled with the position of the first arm.

10. The device according to claim 8 or 9, wherein the activating means comprises a stopper mounted on the bottom side of the first arm closely to the second shaft of the second pulley, a slider arranged in the second arm closely to the second shaft, and when the stopper comes into contact with the slider, the slider is pushed away from the second shaft to release the blocking mechanism.

11. The device according to one of the previous claims, wherein a third arm is attached on the first arm, and the transmission mechanism comprises a third pulley, which is coupled by the toothed belt or the chain with the first pulley to transmit the movement of the first arm to the third arm.

12. The device according to claim 11, wherein the first pulley, the second pulley and the third pulley are arranged on the same plane, which is vertical to the rotation axis of the first arm.

13. Automatic tool changer comprising a tool storage (100) to store a plurality of machining tools and the gripping device according to one of previous claims.

14. Machine tool comprising a spindle (200) for mounting a machining tool therein to machine a workpiece and a tool storage to store a plurality of machining tools and the gripping device according to one of claims 1 to 12, wherein the gripping device is arranged between the spindle and the tool storage.

15. A method for gripping a machining tool mounted in a machine tool comprising:
a. providing a first arm (30) being rotatable about a first rotation axis R1;
b. providing a driving unit operationally connected by a first shaft (24) to the first arm for rotating the first arm;
c. proving a second arm (41a, 41b) being rotatable about a second rotation axis R2, which is in parallel to the first rotation axis R1;
d. providing a gripper unit fixedly mounted on one end of the second arm for grasping the machining tool; and
e. providing a transmission mechanism (20) coupled to the first arm and the second arm and configured to enable the movement of the second arm by transmitting the movement of the first arm (30) to the second arm (40).
